Europäisches Patentamt

European Patent Office

Office européen des brevets

(19)

(11) Numéro de publication: **0 140 760**
**A1**

## (12) DEMANDE DE BREVET EUROPEEN

(21) Numéro de dépôt: **84401950.5**

(22) Date de dépôt: **28.09.84**

(51) Int. Cl.⁴: **G 06 F 7/06,** B 07 C 3/02

(30) Priorité: **04.10.83 FR 8315795**

(43) Date de publication de la demande: **08.05.85**
**Bulletin 85/19**

(84) Etats contractants désignés: **BE DE GB IT**

(71) Demandeur: **Challand, Marc, 95, Boulevard Brune,**
**F-75014 Paris (FR)**

(72) Inventeur: **Challand, Marc, 95, Boulevard Brune,**
**F-75014 Paris (FR)**

(74) Mandataire: **Mongrédien, André et al, c/o**
**BREVATOME 25, rue de Ponthieu, F-75008 Paris (FR)**

(54) **Dispositif modulable et méthodes de classement d'objets Indexés.**

(57) Dispositif modulable et méthodes de classement d'objets indexés.

Le dispositif comprend un système mécanique de rangement (10) et un calculateur de commande (20). Le système de rangement comprend N queues ($Q_1$, $Q_2$, $Q_3$) et M piles, M étant éventuellement nul et N étant supérieur ou égal à N. Le calculateur comprend N zones mémoires ($64Q_1$, $64Q_2$, $64Q_3$) organisées en queue, et M organisées en pile. Il comprend aussi une unité logique apte à effectuer un tri par index et/ou un tri par destination.

Application au classement des lettres.

ACTORUM AG

# Dispositif modulable et méthodes de classement d'objets indexés.

La présente invention concerne un dispositif modulable de classement d'objets indexés et des méthodes de classement utilisant ledit dispositif. Elle trouve une application chaque fois que l'on veut classer des objets selon les valeurs croissantes ou décroissantes d'un code qui leur est affecté, ce code pouvant traduire divers critères, une destination par exemple. Un domaine priviligié d'application de l'invention est le classement de lettres ou de chèques.

Un procédé utilisé actuellement pour obtenir le classement d'objets consiste à effectuer une cascade de tris successifs, effectués en partant des digits de plus faible poids du code numérique servant au classement.

Chaque tri consiste en une séparation du lot à classer en N sous-ensembles, si le digit sur lequel porte ce tri est susceptible de prendre N valeurs. Lorsque le lot entier a été trié selon ce digit, les N sous-ensembles sont empilés dans l'ordre des N valeurs prises et le tri suivant est alors entrepris pour le digit de poids immédiatement supérieur. Le lot est classé quand les tris successifs selon tous les digits ont été réalisés.

Ce procédé de tris successifs ne représente qu'une solution partiellement automatique au problème du classement. Il exige en effet de nombreuse manipulations intermédiaires, qui doivent être effectuées dans un ordre rigoureux, car la moindre interversion, lors de la reprise des lots triés, oblige à reprendre tout le travail.

De plus, le deuxième tri ne peut commencer que lorsque tous les objets du lot à classer ont subi le premier, ce qui interdit en grande partie tout travail préparatoire lorsque l'arrivée des objets à classer est échelonnée dans le temps.

B 7907 C/BL

La présente invention a pour but de remédier à ces inconvénients en permettant d'une part de supprimer toute manipulation de reprise et de classement manuels du contenu de cases de tri, et en permettant d'autre part l'incorporation rapide de lots parvenus après des lots déjà classés.

Le principe de tri selon l'invention est fondé sur la décomposition de la suite des codes associés aux objets en séquences monotones (définies par rapport à la relation d'ordre naturel des nombres réels) de même orientation ou d'orientation différente et sur la fusion par interclassement de plusieurs de ces séquences en une séquence unique. Chaque séquence est repérée par son dernier élément appelé point saillant.

Pour réaliser ce tri, l'invention prévoit un dispositif qui comprend essentiellement un système mécanique de rangement et un système électronique de commande ; le premier comprend des moyens de stockage organisés en queue, c'est-à-dire aptes à faire sortir les objets dans l'ordre où ils sont entrés, et éventuellement des moyens de stockage organisé en pile, c'est-à-dire apte à faire sortir les objets dans l'ordre inverse où ils sont entrés ; ce premier système comprend encore un moyen de transport des objets entre ces différents moyens de stockage ; le système électronique comprend principalement un calculateur de commande muni de zones mémoire organisées en queue et de zones mémoire organisées en pile, dans lesquelles les codes affectés à chaque objet sont stockés ; une quatrième zone mémoire de ce calculateur permet le stockage dynamique des informations indiquant pour chacun des objets stockés dans une queue prédéfinie, appelée moyen de réception, s'ils constituent un point saillant d'une séquence. Dans ce calculateur des moyens sont prévus pour commander le transfert des codes d'une zone mémoire à une autre afin de ranger dans l'une d'elles les codes dans un ordre déterminé et pour commander le déplacement correspondant des objets portant ces codes. Les objets se trouvent finalement rangés dans un ordre donné par rapport audit code dans le moyen de réception.

Selon un mode préféré de réalisation du dispositif de l'invention, le système mécanique de rangement ne comprend que des moyens de stockage organisés en queue. La suite des codes associés aux objets est alors décomposée en séquences de même orientation, c'est-à-dire toutes croissantes ou toutes décroissantes.

Selon une caractéristique secondaire, le système mécanique de rangement, ne comprenant que des moyens de stockage organisés en queue, est structuré en plusieurs étages, les séquences en tête de plusieurs moyens de stockage d'un même étage étant fusionnées entre elles, la séquence obtenue par fusionnement étant chargée dans un moyen de stockage d'un autre étage.

Cette architecture permet de réaliser des transferts ou des fusionnements de séquences simultanément à des étages différents, donc d'effectuer un tri des objets plus rapidement que dans un système à un seul étage.

Selon un autre mode de réalisation du dispositif de l'invention, le système mécanique de rangement comprend un nombre M de moyens de stockage organisés en pile et un même nombre de moyens de stockage organisés en queue. la suite des codes associés aux objets est alors décomposée en séquences alternativement croissantes et décroissantes.

Selon un autre mode de réalisation du dispo-

B 7907.C BL

sitif de l'invention, le système mécanique de rangement comprend un nombre M de moyens de stockage organisés en pile et un nombre M+1 de moyen de stockage organisés en queue.

L'invention a également pour objet un dispositif, apte à réaliser un tri par destination, comprenant un système mécanique de rangement et un système électronique de commande ; le premier comprend des moyens de stockage organisés en queue, c'est-à-dire aptes à faire sortie les objets dans l'ordre où ils sont entrés et un moyen de transport des objets entre ces différents moyens de stockage ; le système électronique comprend principalement un calculateur de commande muni de zones mémoire organisées en queue dans lesquelles les codes affectés à chaque objet sont stockés. Dans ce calculateur, des moyens sont prévus pour commander le transfert des codes d'une zone mémoire à une autre, la zone mémoire de réception étant fonction de la valeur d'un digit du code, le classement étant réalisé par des tris successifs sur chacun des digits des codes.

Selon un mode de réalisation avantageux du dispositif de l'invention, le calculateur est apte à réaliser un tri par destination ou un tri par indexation selon la productivité du code lu.

Les caractéristiques de l'invention apparaîtront mieux après la description qui suit, d'un exemple de réalisation donné à titre explicatif et nullement limitatif, en référence aux dessins annexés sur lesquels :

- la figure 1 est un schéma synoptique d'un mode de réalisation du dispositif selon l'invention dans lequel le système mécanique de rangement ne comporte que des moyens de stockage organisés en queue,

- les figures 2a et 2b sont des schémas illustrant deux modes de gestion du transfert des séquences d'objets d'un moyen de stockage à un autre,

- la figure 3 est un schéma illustrant un premier mode de fonctionnement du dispositif de la figure 1,

- la figure 4 est un schéma illustrant un deuxième mode de fonctionnement du dispositif de la figure 1,

- la figure 5 est un schéma illustrant un troisième mode de fonctionnement du dispositif de la figure 1,

- la figure 6 est un schéma synoptique d'un mode de réalisation du système mécanique de rangement ne comportant que des moyens de stockage en queue, ceux-ci étant groupés en deux étages,

- la figure 7 est un schéma synoptique d'une variante d'un mode de réalisation du système mécanique de rangement comprenant des moyens de stockage en queue groupés en trois étages permettant un traitement des objets selon leur productivité,

- la figure 8 est un schéma synoptique d'un mode de réalisation du système mécanique de rangement d'un dispositif selon l'invention comportant trois moyens de stockage organisés en queue et deux moyens de stockage organisés en pile,

- la figure 9 est un schéma synoptique d'un mode de réalisation du système mécanique de rangement d'un dispositif selon l'invention comportant trois moyens de stockage organisés en queue et trois moyens de stockage organisés en pile.

Il convient d'abord de préciser ce que l'on entend par séquence et point saillant. Ainsi qu'on l'a précisé plus haut, on peut décomposer la suite des codes des objets à classer en un seul type de séquence (séquences de même orientation) ou en deux types de séquence (séquences consécutives d'orientations différentes). Cette décomposition est liée aux moyens de stockage du système mécanique de rangement. Si celui-ci ne comprend que des moyens de stockage organisés en queue, la suite des codes est décomposée en un seul type de séquence. Si celui-ci comprend des moyens de stockage organisés en piles et des moyens de stockage organisés en queue, la suite des codes est décomposée en deux types de séquences.

A titre d'exemple, on va indiquer la décomposition en séquences de même orientation de la suite suivante :

576,804,640,300,186,339,199,905,407,139,94,919,858, 419,127.

La décomposition en séquences croissantes est la suivante :

$\overrightarrow{576,804}/\overrightarrow{640}/\overrightarrow{300}/\overrightarrow{186,339}/\overrightarrow{199,905}/\overrightarrow{407}/\overrightarrow{139}/\overrightarrow{94,919}/\overrightarrow{858}/$ $\overrightarrow{419}/\overrightarrow{127}$.

La décomposition en séquences décroissantes est la suivante :

$\overleftarrow{576}/\overleftarrow{804,640,300,186}/\overleftarrow{339,199}/\overleftarrow{905,407,193,94}/\overleftarrow{919,898,}$ $\overleftarrow{419,127}$.

Sur ces représentations, les flèches indiquent l'orientation des séquences et les barres obliques délimitent les séquences. On appelle point saillant le dernier élément d'une séquence. On peut se représenter le tri comme une opération d'élimination des points saillants (le dernier élément de la dernière séquence n'étant pas considéré comme un point saillant).

On remarque que les deux décompositions ne sont pas équivalentes, l'une comportant 11 séquences et l'autre seulement 5. Comme on s'en convaincra par la suite de la description, toutes choses étant égales par ailleurs, le tri est d'autant plus rapide que le nombre de séquences est faible. Pour un tri optimal, le calculateur de commande du système électronique de traitement mémorisera donc la suite des points saillants correspondant à la plus courte décomposition, en nombre de séquences.

B 7907.C BL

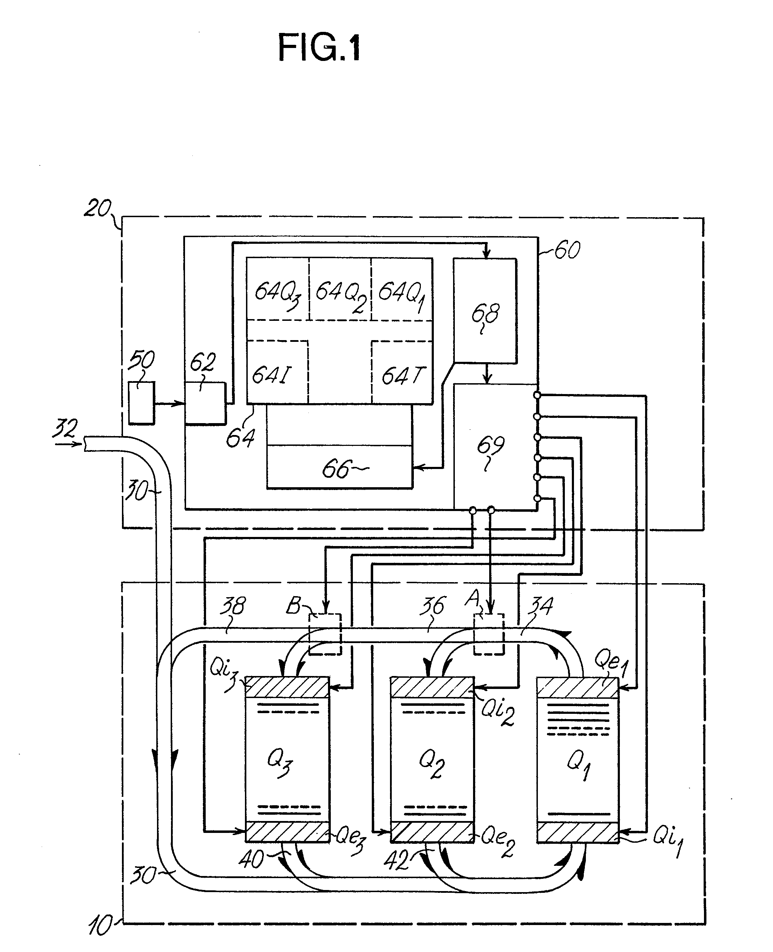

On a représenté sur la figure 1 un dispositif selon l'invention dont les moyens de stockage, au
nombre de trois, sont tous organisés en queue. Ce dispositif comprend essentiellement deux parties : un
système mécanique de rangement 10 et un système électronique de commande 20. Le système mécanique de rangement 10 comprend :

A) un premier moyen de stockage d'objets $Q_1$ organisé
en queue, c'est-à-dire apte à faire sortir les objets dans l'ordre où ils sont entrés ; ce moyen est
pourvu à cette fin d'un élément d'introduction $Qi_1$
des objets dans la queue et d'un élément d'extraction $Qe_1$ du premier objet de la queue,

B) un deuxième moyen de stockage d'objets $Q_2$ organisé
en queue pourvu d'un élément d'introduction $Qi_2$ et
d'un élément d'extraction $Qe_2$,

C) un troisième moyen de stockage d'objets $Q_3$ organisé
en queue pourvu d'un élément d'introduction $Qi_3$ et
d'un élément d'extraction $Qe_3$,

D) un moyen de transport des objets à classer comprenant un certain nombre de branches et d'embranchements : une branche d'introduction 30 entre une entrée 32 et l'élément d'introduction $Qi_1$ du premier
moyen de stockage $Q_1$, une branche 34 entre l'élément
d'extraction $Qe_1$ de ce premier moyen et l'élément
d'introduction $Qi_2$ du deuxième moyen de stockage $Q_2$,
cette branche comprenant un premier aiguillage A,
une branche 36 entre l'aiguillage A et l'élément
d'introduction $Qi_3$ du troisième moyen de stockage
$Q_3$, cette branche comprenant un deuxième aiguillage
B, une branche 38 reliant le second aiguillage B à
la branche d'introduction 30, une branche 40 reliant
l'élément d'extraction $Qe_3$ du troisième moyen de
stockage $Q_3$ à cette même branche d'introduction et
une branche 42 reliant l'élément d'extraction $Qe_2$ du
deuxième élément de stockage $Q_2$ à cette même branche
d'introduction.

Le système électronique de commande 20 comprend : un moyen 50 de lecture d'un code numérique disposé sur les objets qui défilent sur la branche d'introduction 30 et un calculateur de commande 60 comprenant :

a) un circuit tampon d'entrée 62 relié au moyen de lecture 50,

b) une mémoire 64 apte à recevoir les codes des différents objets introduits dans le système de rangement ; cette mémoire comprend notamment trois zones $64Q_1$, $64Q_2$ et $64Q_3$ fonctionnant en queue selon la procédure "premier entré-premier sorti" (ou en terminologie anglosaxonne FIFO pour "First-in-first-out"), une quatrième zone mémoire $64I$ où est stockée l'information indiquant pour chacun des codes de la zone $64Q_1$, si ce code constitue un point saillant et enfin une cinquième zone mémoire $64T$ comprenant des instructions ; les codes mémorisés sont rangés dans les trois zones mémoires $64Q_1$, $64Q_2$, $64Q_3$ comme sont rangés dans les moyens $Q_1$, $Q_2$ et $Q_3$ respectivement les objets traités,

c) un circuit 66 de lecture des données et des instructions stockées dans la mémoire 64,

d) une unité logique 68 exécutant les instructions de programme pour le traitement des données et leur rangement en mémoire,

e) un circuit tampon de sortie 69 relié à l'unité logique 68 et possédant huit sorties reliées respectivement aux éléments d'introduction d'objets $Qi_1$, $Qi_2$, $Qi_3$ aux éléments d'extraction $Qe_1$, $Qe_2$, $Qe_3$ et aux deux aiguillages A et B ; ce circuit délivre des signaux de commande aptes à commander les éléments en question.

L'opération de tri des objets à classer consiste donc en deux types d'opération : des opérations de fusion de séquences et des opérations de transfert de séquences.

Les opérations de fusion de séquences concernent les séquences d'objets situées en tête des moyens de stockage du système mécanique de rangement. Selon le mode de fonctionnement du dispositif, défini par les instructions mémorisées dans la zone 64T, les séquences fusionnées entre elles proviennent de chacun des moyens de stockage ou seulement de certains moyens de stockage. Ces différents modes de fonctionnement seront illustrés par différents dispositifs décrits dans la suite du texte.

Les opérations de transfert de séquences consistent à déplacer une ou plusieurs séquences du moyen de réception vers un autre moyen de stockage. Le nombre de séquences d'objets transférées du moyen de réception à chaque moyen de stockage, à chaque itération de l'algorithme de tri, est quelconque. Un premier mode de transfert possible consiste à transférer, à chaque itération de l'algorithme de tri, une seule séquence du moyen de réception dans chacun des moyens de stockage. Une autre possibilité consiste à répartir, en une seule opération de transfert, les séquences d'objets contenues dans le moyen de réception dans chacun des moyens de stockage. Entre ces deux modes extrêmes de transfert des séquences d'objet, on peut bien entendu envisager des modes de transfert dans lesquels, à chaque itération, on transfère quelques séquences du moyen de réception dans chacun des moyens de stockage.

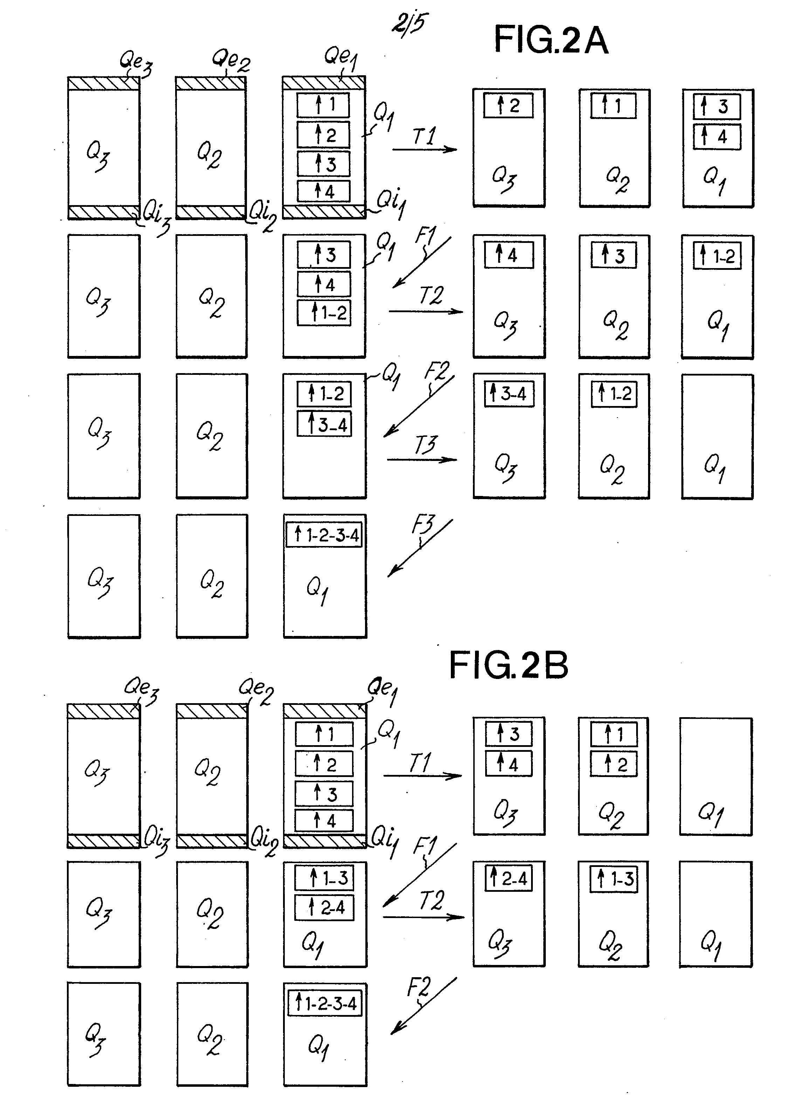

Les figures 2a et 2b illustrent respectivement le cas où chaque moyen de stockage reçoit, à chaque itération, une seule séquence du moyen de réception et le cas où toutes les séquences du moyen de réception sont réparties, en une seule opération de transfert, entre tous les moyens de stockage.

Sur la figure 2a, on a symbolisé un système mécanique de rangement d'un dispositif selon l'invention par trois moyens de stockage organisés en queue et notés respectivement $Q_1$, $Q_2$, $Q_3$. Chacun de ces moyens de stockage comprend un élément d'introduction noté respectivement $Qi_1$, $Qi_2$ et $Qi_3$ et un élément d'extraction noté respectivement $Qe_1$, $Qe_2$ et $Qe_3$.

A l'origine, le moyen de réception $Q_1$ contient quatre séquences monotones symbolisées chacunes par une flèche et un chiffre, ledit chiffre indiquant le numéro d'ordre de la séquence dans le moyen de stockage $Q_1$. Après la première opération de transfert, notée T1, la queue $Q_2$ contient la séquence numérotée 1 et la queue $Q_3$ la séquence numérotée 2. L'opération suivante de l'algorithme de tri consiste à fusionner par interclassement ces deux séquences. Cette opération est notée F1. La séquence résultant de ce fusionnement, notée 1-2, est déposée dans la queue $Q_1$.

La double opération transfert-fusion a donc diminué d'une unité le nombre de séquences contenues dans la queue $Q_1$. Par itération de cette double opération, on va diminuer le nombre de séquences dans la queue $Q_1$ jusqu'à n'avoir plus qu'une seule séquence. Le classement est alors terminé.

La deuxième opération de transfert, notée T2, transfère la séquence numérotée 3 dans la queue $Q_2$ et la séquence numérotée 4 dans la queue $Q_3$. Ces séquences sont fusionnées par interclassement par l'opération de fusion notée F2 ; la séquence résultant de ce fusionnement, notée 3-4, est déposée dans la queue $Q_1$.

La troisième opération de transfert notée T3 transfère la séquence en tête de $Q_1$, notée 1-2, dans la queue $Q_2$ et la séquence 3-4, dans la queue $Q_3$.

L'opération de fusion F3 réalise une fusion par interclassement de ces deux séquences et dépose la séquence résultante dans la queue $Q_1$. Cette séquence résultante est notée 1-2-3-4. La queue $Q_1$ ne comprenant plus qu'une seule séquence, le classement est terminé.

On peut envisager un mode de fonctionnement du dispositif légèrement différent de celui décrit. En effet, après chaque opération de transfert, par exemple T1, il est possible de fusionner les séquences en tête de tous les moyens de stockage y compris le moyen de réception $Q_1$. Ainsi, chaque double opération de transfert-fusion diminue de deux unités le nombre de séquences de la queue $Q_1$. Le classement de la suite des objets contenus dans $Q_1$ demande alors moins d'étapes que dans le cas décrit sur la figure 2a.

La figure 2b illustre un autre mode de transfert des séquences du moyen de réception dans chacun des moyens de stockage. Dans celui-ci, les séquences contenues initialement dans la queue $Q_1$ sont réparties, en une seule opération de transfert, dans les autres queues $Q_2$ et $Q_3$.

A l'origine, la queue $Q_1$ constituant le moyen de réception contient quatre séquences monotones symbolisées chacune par une flèche et un chiffre indiquant le numéro de cette séquence. Après la première opération de transfert, notée T1, la queue $Q_2$ contient les deux premières séquences numérotées 1 et 2 de la queue $Q_1$ et la queue $Q_3$ contient les deux dernières séquences numérotées 3 et 4 de la queue $Q_1$.

L'opération suivante de l'algorithme de tri est une opération de fusion notée F1. Cette opération consiste à fusionner par interclassement les séquences de même rang contenues dans les queues $Q_2$ et $Q_3$. Les séquences obtenues, notées respectivement 1-3 et 2-4 sont déposées dans la queue $Q_1$.

Cette double opération de transfert-fusion est itérée. Dans le cas représenté sur la figure 2b, la queue $Q_1$ ne contenant plus que deux séquences, chacune des queues $Q_2$ et $Q_3$ reçoit une seule séquence. Plus généralement, chaque queue $Q_2$ ou $Q_3$ reçoit la moitié des séquences contenues dans $Q_1$.

Dans le cas d'un système à trois queues, et si le nombre de séquences est impair, la dernière séquence peut par exemple être conservée dans la queue $Q_1$.

Comme dans le cas de la figure 2a, on peut envisager un mode de transfert légèrement différent de celui décrit en référence à la figure 2b en répartissant, à chaque opération de transfert, les séquences contenues dans la queue $Q_1$ dans chacune des queues $Q_1$, $Q_2$ et $Q_3$.

En fusionnant à chaque fois les séquences en tête de chacune des trois queues $Q_1$, $Q_2$ et $Q_3$, on diminue ainsi à chaque fusion le nombre de séquence de deux unités.

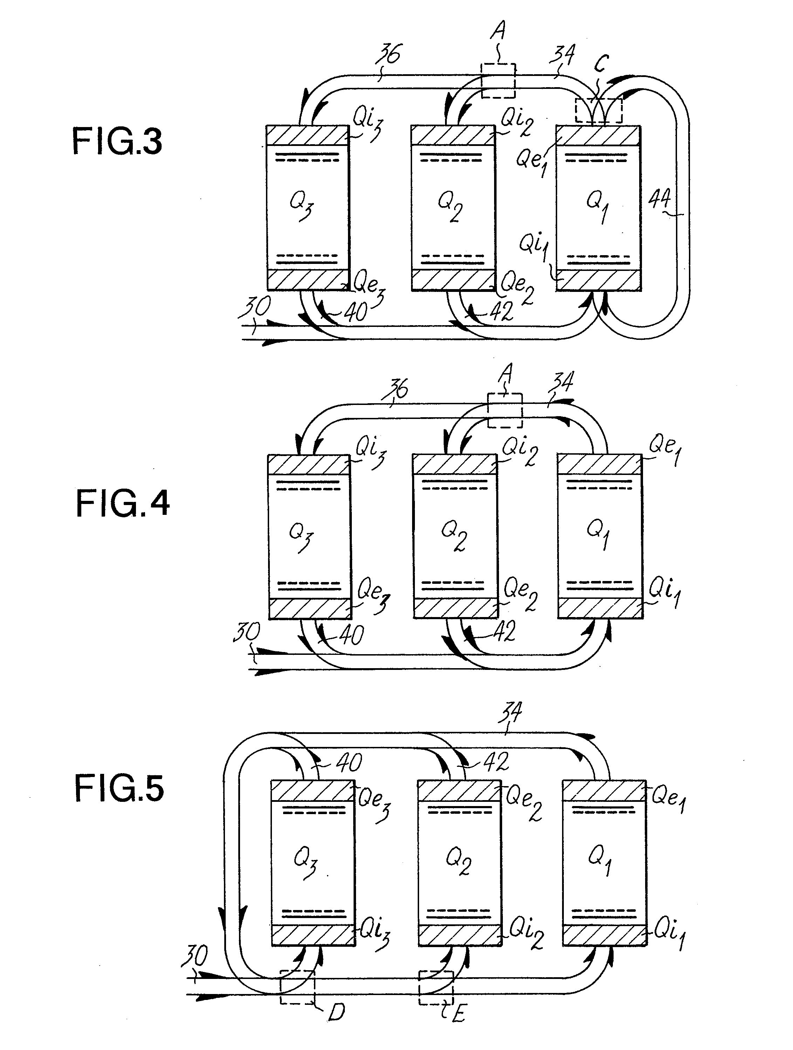

Les opérations de transfert et de fusion peuvent être combinées de différentes manières. Ceci définit autant de modes de fonctionnement du dispositif de l'invention. Trois modes particuliers vont être maintenant décrits en référence aux figures 3, 4 et 5.

Le premier mode de fonctionnement consiste en des opérations de transfert et de fusion séquentielles. C'est le mode de fonctionnement le plus simple. Dans le deuxième mode de fonctionnement, l'opération de transfert se déroule pour partie pendant l'opération de fusion. Ce fonctionnement "en temps masqué" diminue le temps global de classement des objets. Enfin, dans le troisième mode de fonctionnement, les séquences obtenues par fusion sont déposées successivement dans chaque queue. Il en résulte une diminution du nombre des opérations de transfert.

Pour la meilleure compréhension de chacun de ces modes de fonctionnement, on va décrire le classement de la suite mentionnée plus haut, pour chacun desdits modes de fonctionnement. Rappelons que devant l'alternative séquences croissantes-séquences décroissantes, le dispositif choisit la décomposition comportant le plus petit nombre de séquence ce qui, dans ce cas particulier, correspond à une décomposition en séquences décroissantes.

Rappelons la suite :

576,804,640,300,186,339,199,905,407,139,94,919,858, 419,127, et sa décomposition en séquences décroissantes :

$\overleftarrow{576}/\overline{804,640,300,186}/\overline{339,199}/\overline{905,407,139,94}/\overline{919,858,}$ $\overline{419,127}$.

Le système mécanique de rangement représenté sur la figure 3 est fonctionnellement identique à celui représenté sur la figure 1 ; la branche 38 de la figure 1 y est seulement remplacée par la branche 44 reliant directement l'élement d'extraction $Qe_1$ de la queue $Q_1$ à l'élément d'introduction $Qi_1$ de cette même queue. On a indiqué les commandes effectuées à chaque opération et l'état des queues $Q_1$, $Q_2$, $Q_3$.

$Q_1$ (initiale) : 576/804,640,300,186/339,199/905, 407,139,94/919,858,419,127

commande : transfert d'une séquence dans $Q_2$ et $Q_3$,

$Q_1$ : 339,199/905,407,139,94/919,858,419,127

$Q_2$ : 576

$Q_3$ : 804,640,300,186

commande : fusion des séquences en tête de $Q_1$, $Q_2$, $Q_3$,

$Q_1$ : 905,407,139,94/919,858,419,127/804,640,576,339, 300,199,186

commande : transfert d'une séquence dans $Q_2$ et $Q_3$

$Q_1$ : 804,640,576,339,300,199,186

$Q_2$ : 905,407,139,94

$Q_3$ : 919,858,419,127

commande : fusion des séquences en tête de $Q_1$, $Q_2$, $Q_3$.

La queue $Q_1$ contient alors la suite des codes classés correctement. Le classement est terminé.

Le système mécanique de la figure 4 diffère de celui de la figure 3 en ce que la branche 44 reliant directement l'élément d'extraction $Qe_1$ de la queue $Q_1$ à son élément d'introduction $Qi_1$ est supprimée. La séquence en tête de la queue $Q_1$ ne peut donc plus être fusionnée avec les séquences en tête des queues $Q_2$ et $Q_3$. Le transfert de séquences de la queue $Q_1$ dans les queues $Q_2$ et $Q_3$ peut donc se faire en même temps que la fusion des séquences des queues $Q_2$ et $Q_3$.

Le fonctionnement est le suivant :

$Q_1$ (initiale) : 576/804,640,300,186/339,199/905,407, 139,94/919,858,419,127

commande : transfert d'une séquence dans $Q_2$ et dans $Q_3$

$Q_1$ : 339,199/905,407,139,94/919,858,419,127

$Q_2$ : 576

$Q_3$ : 804,640,300,186

commande : fusion des séquences en tête de $Q_2$, $Q_3$ et, simultanément, transfert d'une séquence dans $Q_2$ et dans $Q_3$

$Q_1$ : 919,858,419,127/804,640,576,300,186

$Q_2$ : 339,199

$Q_3$ : 905,407,139,94

commande : fusion des séquences en tête de $Q_2$, $Q_3$ et, simultanément, transfert d'une séquence dans $Q_2$ et dans $Q_3$

$Q_1$ : 905,407,339,199,139,94

$Q_2$ : 919,858,419,127

$Q_3$ : 804,640,576,300,186

commande : fusion des séquences en tête de $Q_2$, $Q_3$ et, simultanément, transfert d'une séquence dans $Q_2$ et dans $Q_3$

$Q_1$ :-

$Q_2$ : 905,407,339,199,139,94

$Q_3$ : 919,858,804,640,576,419,300,186,127 commande : fusion des séquences en tête de $Q_2$ et $Q_3$.

La queue $Q_1$ contient alors la suite des codes classée. Notons que dans ce mode de fonctionnement, on aurait pu répartir en une seule opération toutes les séquences de $Q_1$ dans $Q_2$ et $Q_3$.

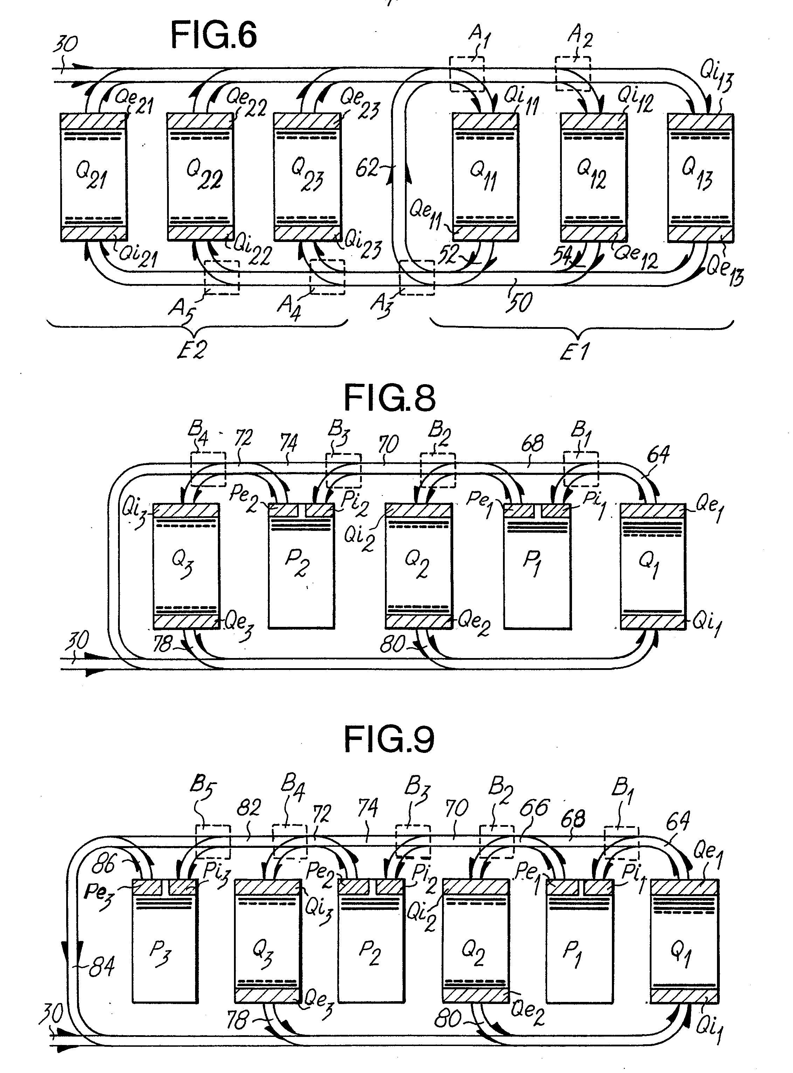

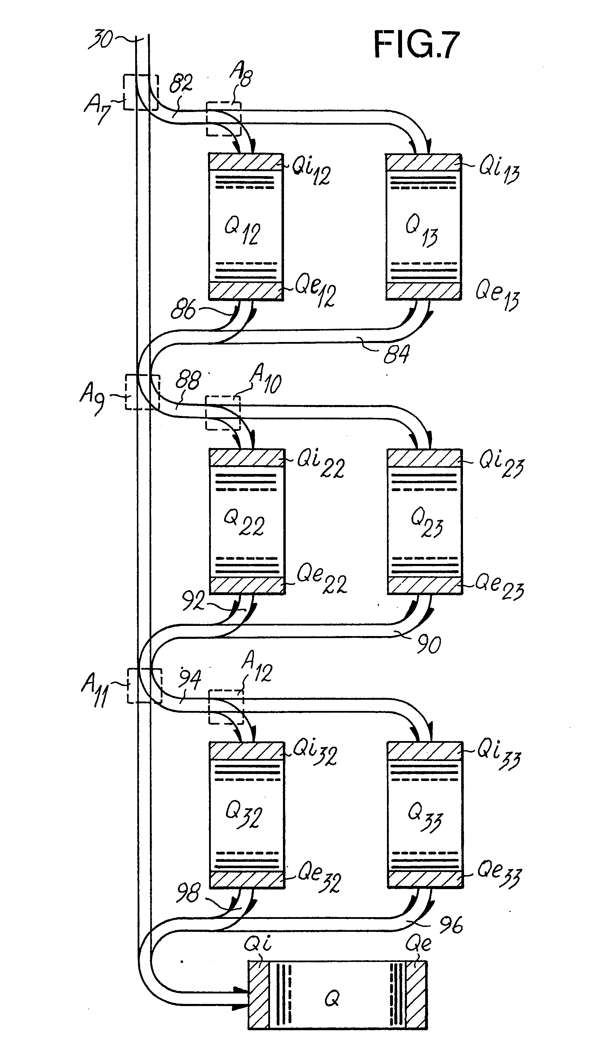

Le système mécanique représenté sur la figure 5 a une architecture différente des systèmes représentés sur les deux figures précédentes. Chaque élément d'extraction y est en effet relié à chaque élément d'introduction.

Dans les systèmes précédents, les éléments d'extraction étaient reliés au seul élément d'introduction de la queue $Q_1$. Toute séquence résultant d'une fusion était donc reçue par la queue $Q_1$ qui la transférait pendant l'opération suivante dans une autre queue. L'architecture du système de la figure 5 supprime cette opération de passage temporaire dans la queue $Q_1$ en permettant de déposer une séquence obtenue par fusion directement dans la queue où elle sera ensuite fusionnée.

Le fonctionnement de ce système est le suivant :

$Q_1$ (initiale) : 576/804,640,300,186/339,199/905,407, 139,94/919,858,419,127

Commande : transfert du tiers des séquences à une ou deux près, dans $Q_2$ et dans $Q_3$

$Q_1$ : 905,407,139,94/919,858,419,127

$Q_2$ : 576/804,640,300,186

$Q_3$ : 339,199

commande : fusion des séquences en tête de $Q_1$, $Q_2$, $Q_3$ et dépôt dans $Q_1$

$Q_1$ : 919,858,419,127/905,576,407,339,199,139,94

$Q_2$ : 804,640,300,186

$Q_3$ : -

commande : fusion des séquences en tête de $Q_1$ et $Q_2$ et dépôt dans $Q_2$

$Q_1$ : 905,576,407,339,199,139,94

$Q_2$ : 919,858,804,640,419,300,186,127

$Q_3$ : -

commande : fusion des séquences en tête de $Q_1$ et $Q_2$.

La séquence obtenue est la suite des codes classée. Elle peut être déposée dans une queue quelconque.

Le demandeur a évalué le nombre global de mouvements d'objets selon les trois architectures de dispositifs décrites. (M représente le nombre de queues et N le nombre d'objets).

Système de la figure 3 : $\frac{2M-1}{M}$ . $N . \log_M(\frac{N}{2})$

Système de la figure 4 : $2 . N . \log_{M-1}(\frac{N}{2})$

Système de la figure 5 : $N . \log_M(\frac{N}{2})$

Les performances sont nettement supérieures à celles des dispositifs de classement connus. Il est possible de les améliorer encore en créant une architecture de système mécanique de rangement à plusieurs étages.

Un exemple d'un tel système est représenté sur la figure 6. Le premier étage E1 est constitué des queues $Q_{11}$, $Q_{12}$ et $Q_{13}$. Les éléments d'introduction

$Qi_{11}$, $Qi_{12}$, $Qi_{13}$ de chacune de ces queues sont reliés à la branche d'introduction 30, par l'intermédiaire d'aiguillages $A_1$ et $A_2$ pour les queues $Q_{11}$ et $Q_{12}$. Les éléments d'extraction de ces queues sont reliés à une branche, la liaison étant assurée par des branches 52 et 54 pour les queues $Q_1$ et $Q_2$.

Le deuxième étage E2 est constitué des queues $Q_{21}$, $Q_{22}$ et $Q_{23}$. Les éléments d'introduction $Qi_{21}$, $Qi_{22}$ et $Qi_{23}$ sont reliés à la branche 52, cette liaison se faisant par des aiguillages $A_4$ et $A_5$ pour les queues $Q_{23}$ et $Q_{22}$. D'autre part les éléments d'extraction $Qe_{21}$, $Qe_{22}$ et $Qe_{23}$ de ces queues sont reliés par des branches 56, 58 et 60 à la branche d'introduction 30. Un aiguillage $A_3$ permet de plus de relier la branche 50 à une branche 62 reliée à la branche d'introduction 30.

Ce système comprend deux étages de trois queues. Le demandeur a calculé que l'indicateur de performance de ce système est $\log_9(m)$, où m est le nombre de séquences et est au plus égal à $\frac{N}{2}$. Un système ayant six queues en parallèle n'aurait qu'un indicateur de performance de $\log_6(m)$. Plus généralement, pour un système de q.k queues, l'indicateur de performance est de $\log_q k(m)$ pour un système à k étages et de $\log_{q.k}(m)$ pour un système à un étage.

L'intérêt d'un système à étages est donc clair. Un tel système est particulièrement utile pour le tri de très gros volumes d'objets, tels que des lettres ou des chèques.

Un mode de fonctionnement simple de ce système consiste à stocker la suite des objets dans l'une des queues du premier étage, par exemple $Q_{11}$, de décomposer cette suite en séquences, de répartir ces séquences dans les queues $Q_{21}$, $Q_{22}$ et $Q_{23}$ du deuxième étage, de fusionner les séquences de même rang desdites queues, les séquences obtenues par fusion étant successivement transférées dans les queues $Q_{11}$, $Q_{12}$ et $Q_{13}$ du premier étage puis d'itérer ces opérations de fusion-transfert d'un étage à l'autre jusqu'au classement des codes de la suite.

Pour profiter pleinement de l'architecture du système, on peut réaliser des fusions simultanément à des étages différents. D'autre part, pour gagner du temps au début du traitement, on peut choisir une orientation de séquence avant le chargement des objets dans le moyen de réception. Au lieu de stocker initialement tous les objets dans $Q_{11}$, on peut alors les répartir, dès le début, séquence par séquence, dans toutes les queues du premier étage. De plus, on peut commencer l'opération de fusion-transfert des séquences en tête des queues du $1^{er}$ étage dans les queues du $2^{eme}$ étage dès que chaque queue du premier étage contient une séquence, sans attendre que tous les objets soient chargés dans le système.

Les systèmes mécaniques de rangement des figures 5 et 6 ont été utilisés pour réaliser un tri par indexation d'une suite de codes. L'architecture des moyens de transport de ces systèmes les rend aptes à réaliser également un tri par destination, un système électronique de commande adéquat étant prévu pour commander ledit système mécanique de rangement.

Le tri par indexation décrit en référence aux figures 3 à 5 est un tri adapté au cas où le nombre de valeurs différentes des codes de la suite d'objets à classer est de l'ordre de grandeur du nombre d'éléments de la suite, c'est-à-dire au cas où les codes ont presque tous une valeur différente. Dans le cas où, au contraire, beaucoup de codes ont la même valeur, et où le nombre de valeurs différentes est connu, il est plus intéressant d'utiliser un autre procédé de tri, le tri par destination.

On va décrire le tri par destination d'une suite d'objets au moyen d'un dispositif dont le système mécanique de rangement est conforme à celui de la figure 5.

Les d (d $>$ 1) destinations des objets à classer sont repérées par un nombre de 1 à d écrit dans la base égale au nombre de moyens de stockage du système mécanique de rangement. A titre d'exemple, si d=14, le système mécanique de rangement ayant 3 moyens de stockage, les destinations recodées sont :

000,001,002,010,011,012,020,021,022,100,101,110,111, 200

Le tri par destination consiste à effectuer une cascade de tris successifs, effectués à partir des digits de plus faible poids de la destination recodée. A chaque tri, pour chaque queue on envoie dans la queue $Q_{i+1}$ ($0 \leqslant i \leqslant 2$) les objets de ladite queue dont le digit du rang traité est égal à i.

Le fonctionnement apparaîtra clairement sur l'exemple suivant. Considérons la suite d'objets à classer suivante :

110,01,00,10,02,01,111,12,21,20,100,00,12,11,101,01, 20,200,22,02,21,02,20,01,21.

Commande : entrée des objets et dépôt dans la queue $Q_{i+1}$ ($0 \leqslant i \leqslant 2$) des objets dont le digit de plus faible poids est égal à i.

$Q_1$ : 110,00,10,20,100,00,20,200,20
$Q_2$ : 01,01,111,21,11,101,01,21,01,21
$Q_3$ : 02,12,12,22,02,02

Commande : pour chaque queue, extraire les objets de ladite queue et déposer dans la queue $Q_{i+1}$ ($0 \leqslant i \leqslant 2$) les objets de ladite queue dont le deuxième digit à partir de la droite est égal à i.

$Q_1$ : 00,100,00,200/01,01,101,01,01/02,02,02
$Q_2$ : 110,10/111,11/12,12
$Q_3$ : 20,20,20/21,21,21/22

Commande : pour chaque queue, extraire les objets de ladite queue et déposer dans la queue $Q_{i+1}$ (0 i 2) les objets de ladite queue dont le troisième digit à partir de la droite est égal à i.

$Q_1$ : 00,00,01,01,01,01,02,02,02,10,11,12,12/20,20,20, 21,21,21,22

$Q_2$ : 100,101/110,111

$Q_3$ : 200

Commande : sortie des objets en dépilant dans l'ordre les queues $Q_1$, $Q_2$ et $Q_3$.

La suite des objets est alors classée.

Un intérêt du procédé de tri est que le nombre de tours de boucles de classement ne dépend pas du nombre d'objets à classer mais seulement du nombre de destinations différentes.

Le demandeur a évalué la vitesse du classement (temps de traitement). Cette vitesse est proportionnelle à l'indicateur de performance égal à $\log_q(d)$ où q est le nombre de queues et d le nombre de destinations.

Lorsqu'on dispose d'un système mécanique de rangement à un étage, il faut attendre que tous les objets soient arrivés dans les queues destinataires pour commencer le tour suivant (puisqu'on dépile successivement chaque queue). On ne peut dépiler qu'après la fin de l'entrée des objets.

Il est aisé de voir qu'en utilisant un système mécanique de rangement ayant au moins deux étages (tel que représenté sur la figure 6), on peut dépiler la queue $Q_{11}$ du premier étage qui contient les destinations repérées par un code ayant un 0 comme chiffre des unités dans les queues $Q_{21}$, $Q_{22}$ et $Q_{23}$ du second étage pendant toute la phase de remplissage.

On a donc une opération en temps masquée importante (gain moyen égal au 1/3 du temps de remplissage pour des étages à 3 queues).

D'autre part lorsque le dispositif fonctionne en tri destination, on a intérêt, pour augmenter la capacité instantannée de traitement et minimiser les risques de blocage ($Q_{11}$ vide, $Q_{12}$ ou $Q_{13}$ pleine) à recodifier les destinations les plus productives par des codes de plus petit poids et, de façon générale, à recoder la suite des destinations classées dans l'ordre décroissant d'importance des flux de trafic par des codes de poids de plus en plus grand. Ceci est possible dans le cas du service postal car il dispose de très nombreuses informations statistiques sur ce genre de question.

Dès lors que le premier étage du système mécanique de rangement est vide ou en instance de dépilage, un second lot d'objets peut être introduit afin d'amorcer pour celui-ci la procédure de tri.

Plus généralement, et moyennant des conditions simples sur la taille des lots d'objets et les formats des queues, une machine à k étages peut effectuer le tri de k lots successifs, ce qui entraîne une utilisation optimale car à pleine capacité.

Une intéressante variante de cette méthode de tri par destination utilisant la recodification décrite plus haut est décrite ci-après et appliquée, à titre d'exemple, au tri de la suite des 25 objets précédents, à savoir :
110,01,00,10,02,01,111,12,21,20,100,00,12,11,101,01,20, 200,22,02,21,02,20,01,21.

Le dispositif mécanique de rangement nécessite d'avoir un nombre d'étages égal au nombre de tris nécessaires au classement des destinations, ou suffisamment de queues par étage pour un dispositif dont le nombre d'étages est fixé. Dans ce dernier cas, ce nombre de queues par étage est déterminé par le calcul de la base de renumérotation des destinations qui doit être telle que les tris successifs ne nécessitent qu'un seul passage dans le dispositif mécanique de rangement.

On a représenté sur la figure 7 un dispositif mécanique de classement pour la mise en oeuvre de cette variante de tri. Ce dispositif comprend trois étages de deux queues chacun, respectivement $Q_{12}$ et $Q_{13}$, $Q_{22}$ et $Q_{23}$, et $Q_{32}$ et $Q_{33}$. Une queue Q de réception est également prévue. Chacune de ces queues est munie d'un élément d'introduction et d'un élément d'extraction.

Ce dispositif comporte un moyen de transport des objets muni d'une branche d'introduction 30 reliée à l'élément d'introduction Qi de la queue Q. Cette branche d'introduction est reliée par l'intermédiaire d'un aiguillage $A_7$ à une branche 82 elle-même reliée par un aiguillage $A_8$ aux éléments d'introduction $Qi_{12}$ et $Qi_{13}$ des queues $Q_{12}$ et $Q_{13}$. Des branches 84 et 86 relient les éléments d'extraction de ces queues à la branche 30. De même, des aiguillages $A_9$, $A_{10}$, $A_{11}$ et $A_{12}$ et des branches 88, 90, 92, 94, 96 et 98 relient les éléments d'introduction et d'extraction des queues $Q_{22}$, $Q_{23}$, $Q_{32}$ et $Q_{33}$ à la branche 30.

La configuration représentée en figure 7 a la propriété d'extraire très rapidement les destinations les plus productives ou celles pour lesquelles existent des contraintes particulières d'organisation du travail et qui ont été recodées par des codes de plus petits poids ; par ailleurs, une économie matérielle est réalisée, puisque les queues $Q_{11}$, $Q_{21}$, $Q_{31}$ sont supprimées, chaque étage comprenant une queue de moins que la configuration représentée sur la figure 6.

Commande : entrée des objets et dépôt dans les queues

B 7907.C BL

$Q_{1,i+1}$ ($1 \leq i \leq 2$) des objets dont le digit de plus faible poids est égal à i ;

Dépôt dans $Q_{2,i+1}$ ($1 \leq i \leq 2$) des objets dans le deuxième digit, à partir de la droite, est i et le digit de plus faible poids est zéro ;

Dépôt enfin dans $Q_{3,i+1}$ ($1 \leq i \leq 2$) des objets dont le digit de poids le plus élevé est i et les deux autres digits 0 ; sortie des objets codés 000.

La situation de la machine en fin de remplissage est la suivante :

$Q_{12}$ : 01,01,111,21,11,101,01,21,01,21.

$Q_{13}$ : 02,12,12,22,02,02.

$Q_{22}$ : 110,10.

$Q_{23}$ : 20,20,20.

$Q_{32}$ : 100.

$Q_{33}$ : 200.

Q (conteneur banalisé de réception) : 00,00

On observe que déjà, la destination codée 00 (la plus productive) a été extraite.

Commande : extraire successivement de chaque queue du premier étage les objets et déposer dans les queues $Q_{2,i+1}$ ($1 \leq i \leq 2$) les objets dont le deuxième digit à partir de la droite est i, dans les queues $Q_{3,i+1}$ ($1 \leq i \leq 2$) les objets dont le troisième digit à partir de la droite est i et le second 0, et enfin sortir du dispositif les objets dont le deuxième et le troisième digits sont égaux à 0.

La situation après le vidage du premier étage est la suivante :

$Q_{22}$ : 110,10/111,11,12,12/

$Q_{23}$ : 20,20,20/21,21,21,22/

$Q_{32}$ : 100/101/

$Q_{33}$ : 200/

Q : 00,00/01,01,01,01,02,02,02/

Deux destinations supplémentaires ont été extraites.

B 7907.C BL

Commande : extraire successivement de chaque queue du second étage les objets et déposer dans les queues $Q_{3,i+1}$ ($1 \leqslant i \leqslant 2$) les objets dont le troisième digit à partir de la droite est i, sortir du dispositif les objets dont le troisième digit est égal à 0.

La situation après le vidage du deuxième étage est la suivante :

$Q_{32}$ : 100/101/110,111

$Q_{33}$ : 200/

Q : 00,00/01,01,01,01,02,02,02/10,11,12,12,20,20,20, 21,21,21,22/

Commande : sortie du dispositif des objets en dépilant dans l'ordre les queues $Q_{32}$ et $Q_{33}$.

On remarque que les objets correspondant aux destinations rangées dans le troisième étage sont, à chaque étape, bien classés ; ceci signifie que l'étage correspondant à la dernière étape d'un tri par destination ne joue qu'un rôle de réceptacle pour les objets. Il n'est donc pas nécessaire d'avoir un troisième étage puisque, dans tous les cas, les objets classés sont conditionnés soit par un enliassage ou soit par une conteneurisation qui maintient le classement. Le tri sur le digit de poids le plus élevé doit, dans cette hypothèse, être effectué directement dans des réceptacles adéquats. Il y a, ainsi, dans le cas du tri destination une "intégration avale" possible du système de réception des objets avec le dispositif de tri proprement dit. Cette remarque qui peut être généralisée à tout dispositif classant un nombre d de directions en un seul passage fait partie de l'invention.

Un même système mécanique peut être utilisé, selon les instructions contenues dans le système électronique de commande, soit en tri d'indexation soit en tri de destination.

Il est donc possible de concevoir un système doté d'un calculateur utilisant le tri destination pour la partie du courrier correspondant aux destinations les plus productives mais aussi les moins nombreuses et le procédé de fusion des séquences monotones pour les destinations très nombreuses et moins productives.

Deux améliorations importantes sont encore possibles. L'une concerne un meilleur traitement en amont du tri (phase de chargement des objets dans le dispositif), l'autre concerne un meilleur traitement en aval du tri (phase du vidage des objets du dispositif).

Le caractère permutable des séquences monotones permet d'envisager sans aucune difficulté technique pour le dispositif piloté par la méthode de tri par indexation, la possibilité d'un remplissage accéléré d'une machine à queues, disposées ou non en étages.

En effet, il est possible d'utiliser (au plus) autant d'injecteurs que de queues et donc de multiplier le débit au remplissage par un facteur égal à leur nombre ; corrélativement, le temps de la phase de remplissage est divisé par ce même nombre, ce qui permet d'amorcer la phase itérative d'interclassement après un délai très bref.

Cependant, le caractère asynchrone des organes d'entrée et de sortie de chacune des queues enlève beaucoup d'intérêt à cet "avantage".

Si l'on suppose par contre, que le moyen de lecture (référencé 50 sur la figure 1) associé à chaque injecteur est situé avant l'organe d'injection dans le dispositif d'interclassement, il est alors possible de réduire considérablement le nombre des séquences injectées dans la machine à trier. L'indicateur de performance associé à une configuration de q queues et q moyens de lecture est :

$$\log_q(m/q) = \log_q(m)-1$$

Le nombre de tours de boucle d'interclassement est diminué d'une unité : le gain de temps obtenu est très substantiel.

Pour une machine à k étages de q queues munies de q moyens de lecture, l'indicateur est de :

$$\log_{(q^k)}(m/q) = \log_{(q^k)}(m)-1/k$$

Ce gain correspond à la suppression d'un transfert de tous les objets à classer d'un étage dans l'autre ; ceci, compte tenu du fait que la configuration du dispositif doit être adaptée au volume du trafic des objets, peut conduire à un gain de temps intéressant, d'autant plus grand que k est faible. Il y a alors, une intégration complète de la ligne des injecteurs au sous-système de tri proprement dit et une utilisation plus intensive et donc plus efficace de ce niveau.

Un dispositif d'accélération peut être envisagé pour le dispositif piloté en tri destination, mais cette fois au moment du vidage. En effet, à la dernière étape du classement des destinations, les queues du dispositif (à étages ou non) sont vidées successivement dans un ordre bien déterminé. Dans ces conditions il suffit de vider directement et simultanément chacune des queues dans une caissette associée grâce à des chemins de convoyage distincts, puisque cette opération maintient la structure d'ordre résultant du tri.

Le gain de temps est important ; mais cette procédure conduit à s'interroger sur l'utilité du transport des objets dans l'étage correspondant au tri relatif, au digit de poids le plus élevé ; ce tri final peut directement s'effectuer dans les caissettes de réception, ce dernier étage ou le dernier tour de boucle d'interclassement étant supprimé selon l'architecture de la machine utilisée.

Il y a alors aussi intégration du système de réception des objets au dispositif de classement proprement dit, par couplage serré des fonctions de chacun d'eux.

L'intégration d'une machine à queues peut donc être réalisée sans problème technique particulier dans la chaîne des opérations de tri, en amont par une meilleure utilisation de la ligne des moyens de lecture pour le tri par indexation, en aval, par un couplage serré entre les fonctions tri et magasinage des objets ; la réalisation de cette intégration conduit à des gains de temps importants et un meilleur rapport coût/efficacité.

On a décrit jusqu'ici plusieurs architectures de dispositif selon l'invention dont le système mécanique de rangement ne comprend que des moyens de stockage organisés en queues. On a également décrit le (ou les) mode(s) de fonctionnement possibles de ces dispositifs. L'invention n'est cependant pas limitée à des dispositifs dont le système mécanique du rangement ne comprend que des queues. En considérant une décomposition de la suite des codes des objets en séquences alternativement croissantes et décroissantes, il est possible de réaliser le classement de cette suite en disposant d'un système mécanique de rangement comprenant aussi des moyens de stockage organisés en piles.

Des exemples de tels systèmes mécaniques de rangement sont représentés schématiquement sur les figures 8 et 9. Sur la figure 8, le système mécanique de rangement comprend deux moyens de stockage organisés en piles et trois moyens de stockage organisés en queues. Cette architecture est du type général des systèmes comprenant M moyens organisés en pile et M+1 moyens organisés en queue. Sur la figure 9, le système mécanique de rangement comprend trois moyens de stockage organisés en piles et trois moyens de stockage organisés en queues. Plus généralement, un système mécanique de rangement suivant cette architecture comprend autant de moyens de stockage en pile que de moyens de stockage en queue.

Pour expliquer le fonctionnement des systèmes mécaniques de rangement représentés sur les figures 8 et 9, on va décrire pour chacun d'eux le classement de la suite, déjà mentionnée plus haut :

576,804,640,300,186,339,199,905,407,139,94,919,898,419,127.

Deux décompositions en séquences alternées sont possibles selon que l'on commence par une séquence croissante ou une séquence décroissante. Choisissons par exemple la décomposition avec une séquence initiale croissante. Ceci conduit à la décomposition suivante :

$$\overrightarrow{576,804}/\overleftarrow{640,300,186}/\overrightarrow{339}/\overleftarrow{199}/\overrightarrow{905}/\overleftarrow{407,139,94}/\overrightarrow{919}/\overleftarrow{898,419,127}.$$

Les séquences croissantes et décroissantes alternent. Elles sont repérées par une flèche orientée vers la droite pour une suite croissante et orientée vers la gauche pour une suite décroissante. Sur cet exemple, le nombre de séquences est égal à huit.

Le système mécanique de rangement représenté sur la figure 8 comprend trois moyens de stockage organisés en queues, notés $Q_1$, $Q_2$ et $Q_3$ et deux moyens de stockage organisés en piles, notés $P_1$ et $P_2$. Chaque queue $Q_1$, $Q_2$ et $Q_3$ comprend un élément d'introduction noté respectivement $Qi_1$, $Qi_2$, $Qi_3$ et un élément d'extraction noté respectivement $Qe_1$, $Qe_2$ et $Qe_3$. Les pi-

les $P_1$ et $P_2$ sont de même chacune munies d'un élément d'introduction noté respectivement $Pi_1$, $Pi_2$ et chacune d'un élément d'extraction noté respectivement $Pe_1$ et $Pe_2$.

Le système mécanique de rangement comprend également un moyen de transport des objets à classer comportant un certain nombre de branches et d'embranchements : une branche d'introduction 30 recevra en entrée les objets à classer et reliés en sortie à l'élément d'introduction $Qi_1$ de la queue $Q_1$, une branche 64 entre l'élément d'extraction $Qe_1$ de la queue $Q_1$ et l'élément d'introduction $Pi_1$ de la pile $P_1$, cette branche comprenant un premier aiguillage $B_1$, une branche 66 entre l'élément d'extraction $Pe_1$ de la pile $P_1$ et l'élément d'introduction $Qi_2$ de la queue $Q_2$, cette branche comprenant un aiguillage $B_2$, une branche 68 entre les aiguillages $B_1$ et $B_2$, une branche 70 entre l'aiguillage $B_2$ et l'élément d'introduction $Pi_2$ de la pile $P_2$, cette branche comprenant un aiguillage $B_3$, une branche 72 entre l'élément d'extraction $Pe_2$ de la pile $P_2$ et l'élément d'introduction $Qi_3$ de la queue $Q_3$, cette branche comprenant un aiguillage $B_4$, une branche 74 entre les aiguillages $B_3$ et $B_4$, une branche 76 entre l'aiguillage $B_4$ et la branche d'introduction 30, une branche 78 reliant l'élément d'extraction $Qe_3$ de la queue $Q_3$ à cette même branche d'introduction et une branche 80 reliant l'élément d'extraction $Qe_2$ de la queue $Q_2$ à cette même branche d'introduction.

Les diverses étapes d'un procédé de classement de la suite précitée adapté au système mécanique de rangement représenté sur la figure 8 sont indiquées ci-dessous. Les commandes effectuées sont données à chaque nouvelle opération ainsi que les états successifs des queues $Q_1$, $Q_2$ et $Q_3$, et des piles $P_1$ et $P_2$ :

$Q_1$ (initiale) : 576,804/640,300,186/339/199/905,407,
139,94/919/898,419,127.

Commande : transfert d'une séquence dans les moyens de stockage $P_1$, $Q_2$, $P_2$ et $Q_3$.

$Q_1$ : 905/407,139,94/919/898,419,127.

$P_1$ : 804,576.

$Q_2$ : 640,300,186.

$P_2$ : 339

$Q_3$ : 199.

Commande : fusion des séquences en tête des moyens de stockage $Q_1$, $P_1$, $Q_2$, $P_2$, $Q_3$.

$Q_1$ : 407,139,94/919/898,419,127/186,199,300,339,576,
640,804,905.

Commande : transfert d'une séquence dans chacun des moyens de stockage $P_1$, $Q_2$, $P_2$, $Q_3$.

$Q_1$ : –

$P_2$ : 94,139,407.

$Q_2$ : 919.

$P_2$ : 127,419,898.

$Q_3$ : 186,199,300,339,576,640,804,905.

Commande : fusion des séquences en tête des moyens de stockage $Q_1$, $P_1$, $Q_2$, $P_2$, $Q_3$.

La queue $Q_1$ contient alors la suite des codes classés dans l'ordre croissant. Le classement est terminé.

Dans le procédé de classement qui vient d'être décrit, on transfère à chaque itération une seule séquence du moyen de stockage $Q_1$ dans chacun des autres moyens de stockage. On aurait pu également répartir toutes les séquences contenues dans le moyen de stockage $Q_1$ dans les autres moyens de stockage en une seule opération, de manière identique au procédé décrit en référence à la figure 2b pour les systèmes mécaniques de rangement ne comportant que des moyens de stockage organisés en queue.

B 7907.C BL

Dans le cas de la figure 8, et plus généralement dans le cas où le système mécanique de rangement comporte des moyens de stockage organisés en pile et des moyens de stockage organisés en queue, il convient cependant de prendre quelques précautions particulières lors des opérations de fusion de séquences. En effet, il faut s'assurer que la séquence obtenue par fusion des séquences en tête de chacun des moyens de stockage et que l'on dépose dans le moyen de stockage organisé en queue $Q_1$ a une orientation différente de la dernière séquence contenue dans la queue $Q_1$.

Ce problème n'a pas eu lieu dans l'exemple décrit en référence à la figure 8. Il est aisé de voir que ce problème survient lorsque la parité du nombre de séquences contenues dans le moyen de stockage $Q_1$ avant les opérations de transfert est égale à la parité du nombre de moyens de stockage concerné par les opérations de fusionnement. Dans l'exemple décrit, cinq moyens de stockage étaient utilisés pour fusionner des séquences et le nombre de séquences contenues dans la queue $Q_1$ était, avant transfert, de huit unités puis de quatre unités. Il n'y avait donc pas de problème de succession de deux séquences de même orientation dans la queue $Q_1$.

Si par contre à l'origine, la queue $Q_1$ contenait seulement sept séquences, la séquence obtenue par fusionnement des séquences en tête de chacun des cinq moyens de stockage aurait eu la même orientation que la séquence se trouvant en fin de la suite des séquences contenues dans $Q_1$.

Un moyen de pallier ceci est de transférer une séquence dans chacun des moyens de stockage autres que $Q_1$ en transférant une séquence alternativement dans une pile puis dans une queue, la première séquence étant transférée dans une pile, puis de fusionner les séquences en tête des moyens de stockage autres que le moyen de stockage $Q_1$.

La séquence obtenue par fusionnement a alors une orientation différente de la dernière séquence de la suite des séquences contenues dans $Q_1$.

L'indicateur de performances associé à cette architecture est égal à $\log_k(m)$, où k est le nombre de moyens de stockage et m est le nombre de séquences qui est statistiquement de l'ordre de $2.N/3$ où N est le nombre d'objets à classer.

Le système mécanique de rangement schématisé sur la figure 9 présente une architecture légèrement différente de celle du système mécanique de rangement de la figure 8. Sur cette figure 9, le nombre de moyens de stockage organisés en pile est égal au nombre de moyens de stockage organisés en queue. A titre d'exemple, ce nombre est égal à 3.

Le système mécanique de rangement comprend donc trois moyens de stockage organisés en queue notés $Q_1$, $Q_2$ et $Q_3$, chacun muni d'un élément d'introduction noté respectivement $Qi_1$, $Qi_2$ et $Qi_3$ et d'un élément d'extraction noté respectivement $Qe_1$, $Qe_2$ et $Qe_3$. Il comprend également trois moyens de stockage organisés en pile noté $P_1$, $P_2$ et $P_3$ munis chacun d'un élément d'introduction noté respectivement $Pi_1$, $Pi_2$ et $Pi_3$ et chacun d'un élément d'extraction noté respectivement $Pe_1$, $Pe_2$ et $Pe_3$.

Le système mécanique de rangement comprend enfin un moyen de transport des objets d'un moyen de stockage à un autre constitué de plusieurs branches et embranchements.

Le système mécanique de rangement de la figure 9 se déduit de celui de la figure 8 par adjonction d'un moyen de stockage en pile $P_3$, par la sup-

pression de la branche 76 du moyen de transport et par l'ajout d'une branche 82 reliant l'aiguillage $B_4$ à l'élément d'introduction $Pi_3$ de la pile $P_3$, cette branche comportant un aiguillage $B_5$, une branche 84 reliant l'aiguillage $B_5$ à l'élément d'introduction $Qi_1$ de la queue $Q_1$ et une branche 86 reliant l'élément d'extraction $Pe_3$ à la branche 84.

Le procédé de classement d'une suite d'objets au moyen du système mécanique de classement de la figure 9 est très proche du procédé de classement décrit en référence à la figure 8. Il convient notamment, comme dans le cas de la figure 8, de s'assurer qu'une séquence fusionnée que l'on dépose dans la queue $Q_1$ a une orientation différente de la dernière séquence contenue dans la queue $Q_1$. Ceci peut être contrôlé de la même manière que dans le cas de la figure 8 en contrôlant par exemple la parité respective du nombre de séquences contenues dans la queue $Q_1$ et la parité du nombre de moyens de stockage du système mécanique de rangement.

Pour illustrer ceci, on va décrire le classement de la suite déjà mentionnée. Les différentes étapes du procédé de classement sont indiquées ci-dessous. Les commandes effectuées sont données à chaque nouvelle opération ainsi que l'état successif des queues $Q_1$, $Q_2$ et $Q_3$ et des piles $P_1$, $P_2$ et $P_3$.

$Q_1$ (initiale) : 576,804/640,300,186/339/199/905/407, 139,94/919/898,419,127.

Commande : transfert d'une séquence de $Q_1$ dans chacun des moyens de stockage $Q_2$, $P_2$, $Q_3$ et $P_3$. (Si l'on avait transféré la première séquence de $Q_1$ dans la pile $P_1$, puis une séquence dans $Q_2$, $P_2$, $Q_3$ et $P_3$, la séquence obtenue par fusionnement des séquences en tête de chacun des moyens de stockage aurait eu une orientation identique à l'orientation de la dernière

0140760

34

séquence contenue dans $Q_1$. Pour pallier ceci, on "saute" la pile $P_1$ pendant l'opération de transfert des séquences. Ceci a pour effet de changer l'orientation de la séquence obtenue par fusionnement. Cette séquence a alors une orientation différente de la dernière séquence contenue dans $Q_1$).

$Q_1$ : 905/407,139,94/919/898,419,127.

$Q_2$ : 576,804.

$P_2$ : 186,300,640.

$Q_3$ : 339.

$P_3$ : 199.

Commande : fusion des séquences en tête de $Q_1$, $Q_2$, $P_2$, $Q_3$ et $P_3$.

$Q_1$ : 407,139,94/919,898,419,127/186,199,300,339,576, 640,804,905.

Commande : transfert d'une séquence de $Q_1$ dans chacun des autres moyens de stockage.

$Q_1$ : -

$P_1$ : 94,139,407.

$Q_2$ : 919.

$P_2$ : 127,419,898.

$Q_3$ : 186,199,300,339,576,640,804,905.

$P_3$ : -

Commande : fusion des séquences en tête de chacun des moyens de stockage.

$Q_1$ : 94,127,139,186,199,300,339,407,419,576,640,804, 898,905,919.

La suite des objets est classée.

Le procédé de classement décrit transfère du moyen de stockage $Q_1$ dans chacun des autres moyens de stockage une seule séquence avant chaque opération de fusionnement. L'invention ne saurait cependant pas être limitée à ce seul mode de transfert des séquences. En particulier, un procédé de transfert qui réalise la répartition dans tous les moyens de stockage des séquences contenues dans $Q_1$ avant chaque opération de fusion (tel que décrit en référence à la figure 2b) est également conforme à l'invention.

L'architecture du système mécanique de rangement représentée sur la figure 9 est intéressante en ce qu'elle permet, par manipulation de certains embranchements, de retrouver les architectures des figures précédentes. Par exemple, si l'on bloque l'aiguillage $B_5$ dans la position telle que les branches 82 et 84 sont reliées, le système mécanique de rangement de la figure 9 se comporte fonctionnellement de la même façon que celui de la figure 8, la pile $P_3$ étant mise hors circuit. De même, si l'on bloque les aiguillages $B_1$, $B_3$ et $B_5$ de telle sorte que respectivement les branches 64 et 68, 70 et 74, 82 et 84 sont reliées, le système mécanique de rangement de la figure 9 est fonctionnellement identique au système mécanique de rangement, ne comprenant que les moyens de stockage en queue, représentés sur la figure 1.

Il est ainsi possible avec une seule machine physique de réaliser plusieurs fonctionnalités et donc d'utiliser pour chaque problème particulier de classement une machine de classement optimale.

## REVENDICATIONS

1. Dispositif de classement d'objets indexés, caractérisé en ce qu'il comprend un système mécanique de rangement (10) et un système électronique de commande (20), le système de rangement comprenant

A) un nombre M, positif ou éventuellement nul de moyens de stockage d'objets ($P_1$, $P_2$, $P_3$) organisés en pile, c'est-à-dire aptes à faire sortir les objets dans l'ordre inverse où ils sont entrés, chacun de ces moyens étant pourvu à cette fin d'un élément d'introduction ($Pi_1$, $Pi_2$, $Pi_3$) des objets sur ladite pile et d'un élément d'extraction ($Pe_1$, $Pe_2$, $Pe_3$) du premier objet de ladite pile,

B) un nombre N, positif et supérieur ou égal à M, de moyens de stockage d'objets ($Q_1$, $Q_2$, $Q_3$) organisés en queue, c'est-à-dire aptesà faire sortir les objets dans l'ordre où ils sont entrés, chacun de ces moyens étant pourvu à cette fin d'un élément d'in-troduction ($Qi_1$, $Qi_2$, $Qi_3$) des objets dans la queue et d'un élément d'extraction ($Qe_1$, $Qe_2$, $Qe_3$) du premier objet de la queue, l'un de ces moyens de stockage en queue constituant un moyen de réception ($Q_1$),

C) un moyen de transport des objets à classer comprenant une branche d'introduction (30) disposée entre une entrée (32) et l'élément d'introduction du moyen de réception, une branche entre l'élément d'extraction dudit moyen de réception et l'élément d'introduction dudit moyen de réception, cette branche étant munie d'aiguillages (A, B) pour relier l'élé-ment d'extraction ($Qe_1$) dudit moyen de réception à chacun des éléments d'introduction ($Qi_2$, $Qi_3$, $Pi_1$, $Pi_2$) des autres moyens de stockage, et des branches pour relier chacun des éléments d'extraction ($Qe_2$, $Qe_3$, $Pe_1$, $Pe_2$) desdits autres moyens de stockage à la branche d'introduction du moyen de réception et le système électronique de commande comprenant :

D) un moyen (50) de lecture d'un code numérique disposé sur les objets qui défilent sur la branche d'introduction (30),

E) un calculateur de commande (60) comprenant :

 a) un circuit tampon d'entrée (62) relié au moyen de lecture (50),

 b) une mémoire (64) apte à recevoir les codes des différents objets introduits dans le système de rangement, cette mémoire comprenant M zones fonctionnant en pile selon la procédure "dernier entré-premier sorti", N zones ($64Q_1$, $64Q_2$, $64Q_3$) fonctionnant en queue selon la procédure "premier entré-premier sorti", une zone (64I) où est stockée l'information indiquant pour chacun des codes des M+N zones mémoires s'il est un point saillant, une zone mémoire (64T) comprenant des instructions, les codes mémorisés étant rangés dans les M+N zones mémoires comme sont rangés dans les moyens de stockage les objets traités,

 c) un circuit (66) de lecture des donnée et des instructions stockées dans la mémoire,

 d) une unité logique (68) exécutant les instructions et apte à :

 - décomposer la suite des codes lus par le moyen de lecture en séquences monotones,

 - mémoriser les points saillants de la suite des codes lus,

 - transférer dans chacun des moyens de stockage autres que le moyen de réception un même nombre q de séquences d'objets du moyen de réception,

 - fusionner par interclassement les séquen-

B 7907.C BL

ces d'objets de même rang de chacun des moyens de stockage et, éventuellement, du moyen de réception, la séquence obtenue par fusion étant stockée dans le moyen de réception,

- itérer les opérations de transfert et de fusion tant que des points saillants subsistent dans la suite des objets du moyen de réception, l'exécution de ces instructions ayant pour effet de ranger les codes dans un ordre déterminé dans une zone mémoire fonctionnant en queue, l'unité logique étant en outre apte à délivrer des ordres de commande pour déplacer les objets correspondant à ces codes, d'un moyen de stockage à un autre pour obtenir finalement dans le moyen de réception les objets rangés dans l'ordre souhaité,

e) un circuit tampon de sortie (69) relié à l'unité logique et possédant des sorties reliées aux éléments d'introduction, aux éléments d'extraction et aux aiguillages.

2. Dispositif selon la revendication 1, caractérisé en ce que, à chaque itération, le nombre q de séquences transférées, par l'unité logique du calculateur, du moyen de réception aux moyens de stockage est égal à un.

3. Dispositif selon la revendication 1, caractérisé en ce que, à chaque itération, le nombre q de séquences transférées, par l'unité logique du calculateur, du moyen de réception dans chacun des autres moyens de stockage, est égal au quotient de la division de $x+N+M$ par $N+M$, où $x$ est le nombre de séquences contenues dans le moyen de réception.

4. Dispositif selon l'une quelconque des revendications 2 et 3, caractérisé en ce que le nombre de moyens de stockage organisés en pile étant nul, la

B 7907.C BL

suite des codes lus par le moyen de lecture est décomposé, par l'unité logique du calculateur, en séquences monotones, toutes les séquences ayant une même orientation.

5. Dispositif selon la revendication 4, caractérisé en ce que l'unité logique est apte à :

- fusionner par interclassement des séquences de même rang de chacun des moyens de stockage autres que le moyen de réception et simultanément, à

- transférer des paquets de séquences du moyen de réception dans chacun des moyens de stockage autre que le moyen de réception.

6. Dispositif selon la revendication 4, caractérisé en ce que le moyen de réception de la séquence obtenue par interclassement est, à chaque itération, un moyen de stockage différent.

7. Dispositif selon la revendication 4, caractérisé en ce que les moyens de stockage sont groupés en étages, tous les étages comprenant un même nombre de moyens de stockage et en ce que chaque séquence obtenue par interclassement de séquences en tête des moyens de stockage d'un étage est classée dans un moyen de stockage d'un autre étage, chaque moyen de stockage dudit autre étage recevant successivement une séquence dudit étage.

8. Dispositif selon l'une quelconque des revendications 4 à 7, caractérisé en ce qu'il comprend en outre au moins un moyen de lecture supplémentaire et une branche pour relier ce moyen de lecture à au moins un élément d'introduction d'un moyen de stockage du premier étage du système mécanique de rangement.

9. Dispositif selon la revendication 8, caractérisé en ce qu'il comporte autant de moyens de lecture que de moyens de stockage par étage, chaque moyen de lecture étant relié à l'élément d'introduction d'un moyen de stockage du premier étage du système mécanique de rangement.

10. Dispositif selon l'une quelconque des revendications 2 et 3, caractérisé en ce que le nombre M de moyens de stockage organisés en pile n'étant pas nul, la suite des codes lus par le moyen de lecture est décomposée par l'unité logique du calculateur en séquences monotones, deux séquences consécutives étant d'orientations différentes et en ce que, à chaque itération, l'unité logique transfère dans chacun des moyens de stockage des paquets de q séquences d'objets, ces paquets étant transférés alternativement dans un moyen de stockage en queue et dans un moyen de stockage en pile.

11. Dispositif selon la revendication 10, caractérisé en ce que le système mécanique de rangement comporte M moyens de stockage organisés en pile et M+1 moyens de stockage organisés en queue dont le moyen de réception recevant la liste des codes lus et en ce que, à chaque itération, le premier paquet de q séquences d'objets transférés du moyen de réception est reçu dans un moyen de stockage en queue.

12. Dispositif selon la revendication 10, caractérisé en ce que le système mécanique de rangement comporte M moyens de stockage organisés en piles et M moyens de stockage organisés en queue, dont un moyen de réception recevant la liste des codes lus et en ce que, à chaque itération, le premier paquet de q séquences d'objets transférés du moyen de réception est reçu dans un moyen de stockage organisé en pile.

13. Dispositif de classement par destination d'objets indexés, caractérisé en ce qu'il comprend un système mécanique de rangement (10) et un système électronique de commande (20), le système de rangement comprenant :

A) un nombre N de moyens de stockage organisés en queue, c'est-à-dire aptes à faire sortir les objets dans l'ordre où ils sont entrés, chacun de ces éléments étant pourvu à cette fin d'un élément d'introduction des objets dans la queue et d'un élément d'extraction du premier objet de la queue, ces moyens de stockage étant ordonnés, leurs rangs étant compris entre 0 et N-1, lesdits moyens de stockage étant éventuellement disposés en étage,

B) un moyen de transport des objets à classer muni de branches et embranchements permettant de relier chaque élément d'extraction à tous les éléments d'introduction, ledit moyen de transport étant muni en outre d'une branche d'introduction (30) reliée à tous les éléments d'introduction, et à tous les éléments d'extraction,

C) un moyen de lecture d'un code numérique disposé sur les objets qui défilent sur la branche d'introduction (30),

D) un calculateur de commande (60) comprenant :

      a) un circuit tampon d'entrée (62) relié au moyen de lecture (50),

      b) une mémoire (64) apte à recevoir les codes des différents objets introduits dans le système de rangement, cette mémoire comprenant N zones ($64Q_1$, $64Q_2$, $64Q_3$) fonctionnant en queue selon la procédure "premier entré-premier sorti", une zone mémoire (64T) comprenant des instructions, les codes mémorisés étant rangés dans les N zones mémoires comme sont rangés dans les moyens de stockage les objets traités,

      c) un circuit (66) de lecture des données et des instructions stockées dans la mémoire,

      d) une unité logique (68) exécutant les instructions et apte à :

- remplacer le code de chaque objet par un code de destination compris entre 1 et d, où d est le nombre de destinations possibles,

- exprimer le nouveau code de chaque objet en une base P,

- réaliser un tri par destination en déposant les objets dans des moyens de stockage selon un critère basé sur la valeur des digits des codes de ces objets.

14. Dispositif selon la revendication 13, caractérisé en ce que les moyens de stockage sont groupés en étages, le nombre d'étages étant égal au nombre de digits des codes des objets, chaque étage comportant P moyens de stockage, et en ce que l'unité logique (68) réalise le tri par destination par les opérations suivantes :

- stocker chaque objet introduit dans le système de rangement dans le moyen de stockage ayant pour rang la valeur du digit de poids le plus faible du code de cet objet,

- itérer pour chaque digit du code des objets, dans l'ordre croissant des rangs des digits, l'opération suivante, les itérations successives étant réalisées dans des étages consécutifs :
pour chaque moyen de stockage, par rang croissant desdits moyens de stockage, transférer chaque objet dudit moyen de stockage dans le moyen de stockage dont le rang est égal à la valeur du digit, de rang courant, du code dudit objet,

- dépiler dans l'ordre des rangs croissants les moyens de stockage.

15. Dispositif selon la revendication 13, caractérisé en ce que les moyens de stockage sont groupés en étages, le nombre d'étages étant égal au nombre de digits des codes des objets, chaque étage comportant P-1 moyens de stockage, et en ce que l'unité logique (68) réalise le tri par destination par les opérations suivantes :

- stocker chaque objet introduit dans le système, les objets dont le $k^{ième}$ ($k>0$) digit à partir de la droite est égal à i ($1<i<P-1$) et les k-1 digits de droite sont égaux à 0 étant déposés dans la queue $Q_{k,i+1}$, où k indique le $k^{ième}$ étage et i+1 le rang du moyen de stockage dans l'étage, et les objets dont tous les digits sont nuls étant sortis du système mécanique de rangement,

- prendre les objets de l'étage j et déposer les objets dont le $k^{ième}$. ($k>j$) digit à partir de la droite est égal à i ($1<i<P-1$) et les k-j digits à droite du $k^{ième}$ digit sont égaux à 0 dans la queue $Q_{k,i+1}$, où k indique le $k^{ième}$ étage et i+1 le rang du moyen de stockage dans l'étage, et sortir du système mécanique de rangement les objets dont tous les digits de rang supérieur ou égal à j sont nuls, cette opération étant réalisée successivement pour chaque étage j, pris dans l'ordre et en partant du premier étage.

16. Dispositif selon l'une quelconque des revendications 13 à 15, caractérisé en ce qu'il comprend plusieurs moyens de réception, chacun desdits moyens étant relié à au moins un élément d'extraction des moyens de stockage du dernier étage du système mécanique de rangement.

17. Dispositif selon la revendication 16, caractérisé en ce qu'il comprend autant de moyens de réception que de moyens de stockage par étage, chaque moyen de réception étant relié à l'élément d'extraction d'un moyen de stockage du dernier étage du système mécanique de rangement.

18. Dispositif de classement d'objets indexés caractérisé en ce qu'il comprend un système mécanique de rangement (10) et un système électronique de commande (20), le système de rangement comprenant :

A) un nombre N de moyens de stockage organisés en queue, c'est-à-dire aptes à faire sortir les objets dans l'ordre où ils sont entrés, chacun de ces éléments étant pourvu à cette fin d'un élément d'introduction des objets dans la queue et d'un élément d'extraction du premier objet de la queue, ces moyens de stockage étant ordonnés, leurs rangs étant compris entre 0 et N-1,

B) un moyen de transport des objets à classer muni de branches et embranchements permettant de relier chaque élément d'extraction à tous les éléments d'introduction, ledit moyen de transport étant muni en outre d'une branche d'introduction (30) reliée à tous les éléments d'introduction, et à tous les éléments d'extraction,

C) un moyen (50) de lecture d'un code numérique disposé sur les objets qui défilent sur la branche d'introduction (30),

D) un calculateur de commande (60) comprenant :

a) un circuit tampon d'entrée (62) relié au moyen de lecture (50),

b) une mémoire (64) apte à recevoir les codes des différents objets introduits dans le système de rangement, cette mémoire comprenant N zones ($64Q_1$, $64Q_2$, $64Q_3$) fonctionnant en queue selon la procédure "premier entré-premier sorti", une zone (64I) où est stockée, dans le cas d'un classement par index, l'information indiquant pour chacun des codes des N zones mémoires s'il est un point saillant, une zone mémoire (64T) comprenant des instructions, les codes mémorisés étant rangés dans les N zones mémoires comme sont rangés dans les moyens de stockage les objets traités,

c) un circuit (66) de lecture des données et des instructions stockées dans la mémoire,

B 7907.C BL

d) une unité logique (68) exécutant les instructions et apte à effectuer un tri par index sur une certaine catégorie d'objets et un tri par destination sur les autres objets, ladite unité logique fonctionnant en tri par index conformément à l'unité logique du dispositif de la revendication 4 et fonctionnant en tri par destination conformément à l'unité logique du dispositif de la revendication 11.

19. Dispositif selon la revendication 18, caractérisé en ce que l'unité logique (68) détermine le type de tri effectué sur un objet en fonction d'un critère de productivité du code de cet objet

B 7907.C BL

FIG.1

0140760

2/5

**FIG.2A**

**FIG.2B**

FIG.3

FIG.4

FIG.5

FIG.6

FIG.8

FIG.9

0140760

5/5

FIG.7

Office européen des brevets

**RAPPORT DE RECHERCHE EUROPEENNE**

0140760
Numéro de la demande

EP 84 40 1950

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | EP-A-0 092 460 (FUSTIER) (priorité 15-04-1982, publication 26-10-1983) * figure 1; résumé; revendication 1 * | 1,13, 18 | G 06 F 7/06 B 07 C 3/02 |
| A | US-A-4 388 994 (SUDA) * figure 1; résumé * | 1,13 | |
| A | US-A-4 247 008 (DOBBS) * colonne 1, ligne 52 - colonne 2, ligne 46 * | 1 | |
| A | EP-A-0 021 614 (NCR CANADA LTD.) * figures 1-7; pages 1-3 * | 1 | |
| A | IBM TECHNICAL DISCLOSURE BULLETIN, vol. 22, no. 9, février 1980, New York, US; L.R. POWER: "Internal sorting using a minimal tree merge strategy" | 1 | DOMAINES TECHNIQUES RECHERCHES (Int. Cl.4) B 07 C G 06 F |
| A | IBM TECHNICAL DISCLOSURE BULLETIN, vol. 13, no. 5, octobre 1970, pages 1345-1348, New York, US; R.H. HILLSLEY et al.: "Recycling document sorting and sort algorithm" | 1 | |

Le présent rapport de recherche a été établi pour toutes les revendications

| Lieu de la recherche | Date d'achèvement de la recherche | Examinateur |
|---|---|---|
| LA HAYE | 09-01-1985 | PESCHEL W. |